(19)

Europäisches
Patentamt
European
Patent Office
Office européen
des brevets

(11)  EP 4 549 628 A1

(12)  **EUROPEAN PATENT APPLICATION**
published in accordance with Art. 153(4) EPC

(43) Date of publication:
07.05.2025  Bulletin 2025/19

(21) Application number: 23852301.3

(22) Date of filing: 13.07.2023

(51) International Patent Classification (IPC):
C25B 15/00 (2006.01)   C25B 1/04 (2021.01)
C25B 1/042 (2021.01)   C25B 9/00 (2021.01)
C25B 9/70 (2021.01)

(52) Cooperative Patent Classification (CPC):
C25B 1/04; C25B 1/042; C25B 9/00; C25B 9/70;
C25B 15/00; Y02E 60/36

(86) International application number:
PCT/JP2023/025823

(87) International publication number:
WO 2024/034318 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  09.08.2022  JP 2022126962

(71) Applicant: **Mitsubishi Heavy Industries, Ltd.**
**Tokyo 100-8332 (JP)**

(72) Inventor: **HARA, Keijo**
**Tokyo 100-8332 (JP)**

(74) Representative: **Studio Torta S.p.A.**
**Via Viotti, 9**
**10121 Torino (IT)**

(54)  **CONTROL DEVICE FOR HYDROGEN PRODUCTION FACILITY, HYDROGEN PRODUCTION FACILITY, METHOD FOR CONTROLLING HYDROGEN PRODUCTION FACILITY, AND CONTROL PROGRAM FOR HYDROGEN PRODUCTION FACILITY**

(57)    This control device is for a hydrogen production facility and comprises: a plurality of electrolysis cells for electrolyzing water or steam; and a plurality of rectifiers for supplying DC power to each of the plurality of electrolysis cells. The control device is provided with: a degradation coefficient acquisition unit configured to acquire a plurality of degradation coefficients indicating the degrees of deterioration of the respective electrolysis cells, an individual necessary current calculation unit configured to calculate, on the basis of a total necessary current corresponding to a hydrogen generation volume required for the hydrogen production facility and the plurality of degradation coefficients, a plurality of individual necessary currents indicating necessary currents required for the electrolysis cells; and a control unit configured to control the respective rectifiers on the basis of the plurality of individual necessary currents. The degradation coefficient acquisition unit is configured to acquire, for the respective electrolysis cells, the degradation coefficients on the basis of a first correlation indicating the correlation between applied voltages to the respective electrolysis cells and currents flowing through circuits including the electrolysis cells at a beginning of life of the electrolysis cells, and a second correlation indicating the correlation at an end of life of the electrolysis cells.

FIG. 3

## Description

Technical Field

The present disclosure relates to a control device for a hydrogen production facility, a hydrogen production facility, a method for controlling a hydrogen production facility, and a control program for a hydrogen production facility.
The present application claims priority based on JP 2022-126962 filed in the Japan Patent Office on August 9, 2022, and is hereby incorporated by reference.

Background Art

As a facility for producing hydrogen, a hydrogen production facility including an electrolytic device that generates hydrogen by electrolyzing water or steam is known.
Patent Document 1 discloses a system for producing hydrogen by electrolyzing water in a water electrolysis device provided with an electrolysis cell including a solid electrolyte membrane.

Citation List

Patent Literature

Patent Document 1: JP 2002-129372 A

Summary of Invention

Technical Problem

An electrolysis cell (electrolytic device) for electrolyzing water or steam deteriorates and decreases in performance over time or in accordance with an operation state (operating ratio or the like). Further, even when a plurality of electrolysis cells are operated under the same conditions, individual differences exist in a degree of deterioration.
In a hydrogen production facility including a plurality of electrolysis cells having different degrees of deterioration, when the plurality of electrolysis cells are operated at an equal load (hydrogen generation volume), an electrolysis cell with advanced deterioration deteriorates more rapidly, resulting in the possibility that an operation period (service life) of the hydrogen production facility (plant) as a whole will be shortened.
In view of the above circumstances, it is an object of at least one embodiment of the present invention to provide a control device for a hydrogen production facility, a hydrogen production facility, a method for controlling a hydrogen production facility, and a control program for a hydrogen production facility, which can lengthen an operation period of a plant as a whole.

Solution to Problem

A control device for a hydrogen production facility according to at least one embodiment of the present invention is a control device for a hydrogen production facility including a plurality of electrolysis cells for electrolyzing water or steam, and a plurality of rectifiers for respectively supplying DC power to the plurality of electrolysis cells. The control device includes a degradation coefficient acquisition unit configured to acquire a plurality of degradation coefficients respectively indicating degrees of deterioration of the plurality of electrolysis cells, an individual necessary current calculation unit configured to calculate, on the basis of a total necessary current corresponding to a hydrogen generation volume required for the hydrogen production facility and the plurality of degradation coefficients, a plurality of individual necessary currents respectively indicating necessary currents required for the plurality of electrolysis cells, and a control unit configured to respectively control the plurality of rectifiers on the basis of the plurality of individual necessary currents. The degradation coefficient acquisition unit is configured to acquire, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.
Further, a hydrogen production facility according to at least one embodiment of the present invention includes a plurality of electrolysis cells for electrolyzing water or steam, a plurality of rectifiers for respectively supplying DC power to the plurality of electrolysis cells, and the control device described above configured to adjust an output voltage or an output current of each of the plurality of rectifiers.
Further, a control method for a hydrogen production facility according to at least one embodiment of the present invention is a control method for controlling a hydrogen production facility including a plurality of electrolysis cells for electrolyzing water or steam, and a plurality of rectifiers for respectively supplying DC power to the plurality of electrolysis cells. The control method includes acquiring a plurality of degradation coefficients respectively indicating degrees of deterioration of the plurality of electrolysis cells, calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells, and respectively controlling the plurality of rectifiers on the basis of the plurality of individual necessary currents. The acquiring the plurality of degradation coefficients acquires, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

Further, a control program for a hydrogen production facility according to at least one embodiment of the present invention is a control program for controlling a hydrogen production facility including a plurality of electrolysis cells for electrolyzing water or steam, and a plurality of rectifiers for respectively supplying DC power to the plurality of electrolysis cells. The control program is configured to cause a computer to execute acquiring a plurality of degradation coefficients respectively indicating degrees of deterioration of the plurality of electrolysis cells, calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells, and respectively controlling the plurality of rectifiers on the basis of the plurality of individual necessary currents. The acquiring the plurality of degradation coefficients acquires, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

Advantageous Effects of Invention

According to at least one embodiment of the present invention, provided are a control device for a hydrogen production facility, a hydrogen production facility, a method for controlling a hydrogen production facility, and a control program for a hydrogen production facility, which can appropriately lengthen an operation period of a plant as a whole.

Brief Description of Drawings

FIG. 1 is a schematic diagram of a hydrogen production facility to which a control device according to an embodiment is applied.
FIG. 2 is a schematic configuration diagram of a control device according to an embodiment.
FIG. 3 is a block diagram illustrating a configuration of a control device according to an embodiment.
FIG. 4 is a graph for describing procedures of a method of control according to an embodiment.

Description of Embodiments

Embodiments of the present invention will be described in detail below with reference to the accompanying drawings. However, the dimensions, materials, shapes, relative arrangements, or the like of the components described as embodiments or illustrated in the drawings are not intended to limit the scope of the present invention but are merely illustrative examples.

Configuration of Hydrogen Production Facility

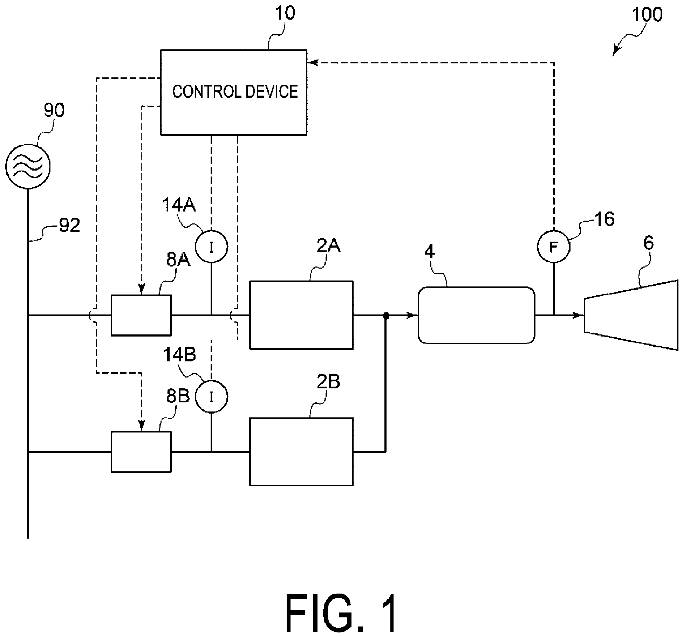

FIG. 1 is a schematic diagram of a hydrogen production facility to which a control device according to an embodiment is applied. As illustrated in FIG. 1, a hydrogen production facility 100 includes a plurality of electrolysis cells 2 (2A, 2B), a plurality of rectifiers 8 (8A, 8B), and a control device 10. The hydrogen production facility 100 may include a storage part 4 that stores hydrogen generated at the plurality of electrolysis cells 2(2A, 2B). Note that, although two electrolysis cells 2 and two rectifiers 8 are illustrated in FIG. 1, quantities of the electrolysis cells 2 and the rectifiers 8 constituting the hydrogen production facility 100 are not limited.

Each of the plurality of electrolysis cells 2 (2A, 2B) is configured to electrolyze water or steam by DC voltage being applied thereto. A type of the plurality of electrolysis cells 2 is not limited. The plurality of electrolysis cells 2 may be, for example, electrolysis cells (electrolytic tanks) for an alkaline water electrolysis device, a polymer electrolyte membrane (PEM) water electrolysis device, or an anion exchange membrane (AEM) water electrolysis device for electrolyzing water (liquid), or may be electrolysis cells of a solid oxide electrolysis cell (SOEC) electrolytic device for electrolyzing steam.

The plurality of rectifiers 8 (8A, 8B) are configured to respectively supply DC power to the plurality of electrolysis cells 2 (2A, 2B). Each of the plurality of rectifiers 8 is supplied with power (typically AC power) from a power source 90 via a transmission system 92. The power source 90 may be a power grid or other power source (power generation device or energy storage device (battery), for example). The plurality of rectifiers 8 each convert the power from the power source 90 from AC power to DC power as necessary and respectively output the DC power to the plurality of electrolysis cells 2 as DC voltage. Hereinafter, the DC voltage output from the rectifiers 8 to the electrolysis cells 2 (voltage applied to the electrolysis cells 2) is also referred to as output voltage. Further, the rectifiers 8 are configured to be capable of changing the output voltage.

Water or steam is supplied to the electrolysis cells 2. As described above, DC power is supplied to the electrolysis cells 2 via the rectifiers 8. The water or the steam in the electrolysis cell 2 is electrolyzed by DC applying voltage between a pair of electrodes provided in the electrolysis cell 2 via the rectifier 8 to produce hydrogen on a cathode side and oxygen on an anode side. Water (electrolyte solution) in which an electrolyte is dissolved may be supplied to the electrolysis cell 2 and the water (water constituting the electrolyte solution) may be electrolyzed. The electrolyte may be an alkaline substance such as potassium hydroxide (KOH).

The hydrogen gas produced on the cathode side of the electrolysis cell 2 is guided to a gas-liquid separator and/or a dehumidifier to remove moisture, and then guided to the storage part 4. The oxygen gas produced on the anode side of the electrolysis cell 2 is guided to a gas-liquid separator and/or a dehumidifier to remove moisture, and then may be supplied to an oxygen consumption facility, or may be discharged to the outside.

The storage part 4 is configured to store gaseous hydrogen. The hydrogen stored in the storage part 4 may be supplied to a hydrogen consumption facility 6. The storage part 4 may have characteristics suitable for supplying hydrogen to the hydrogen consumption facility 6. The storage part 4 may include, for example, a storage header (header tank).

The hydrogen consumption facility 6 may include, for example, hydrogen combustion facilities configured to burn hydrogen (gas turbine facilities or iron production facilities, for example), hydrogen liquefaction facilities configured to liquefy hydrogen, facilities that generate electricity by chemical reaction using hydrogen as fuel (power generation facilities including fuel cells such as solid oxide fuel cells (SOFCs), for example), facilities that manufacture fuel using hydrogen as feedstock (fuel synthesis facilities, for example), or hydrogen gas stations configured to supply hydrogen to the equipment.

The hydrogen production facility 100 may include a plurality of current sensors 14 (14A, 14B) for measuring the DC currents flowing through circuits respectively including the plurality of electrolysis cells 2 when water is electrolyzed in the plurality of electrolysis cells 2. The circuit includes electric wires respectively connecting a pair of output terminals of the DC voltage of the rectifier 8 and the pair of electrodes of the electrolysis cell 2. The current sensors 14 (14A, 14B) may be configured to measure a current flowing between one of the pair of terminals described above of the rectifier 8 and one of the pair of electrodes of the electrolysis cell 2.

The hydrogen production facility 100 may include a flow rate sensor 16 for measuring a consumption flow rate of hydrogen at the hydrogen consumption facility 6. The flow rate sensor 16 may be provided on a line for guiding hydrogen from the storage part 4 to the hydrogen consumption facility 6, as illustrated in FIG. 1.

The current sensors 14 and/or the flow rate sensor 16 may be electrically connected to the control device 10, and a signal indicating measurement results by the current sensors 14 and/or the flow rate sensor 16 may be sent to the control device 10.

Control of Hydrogen Production Facility

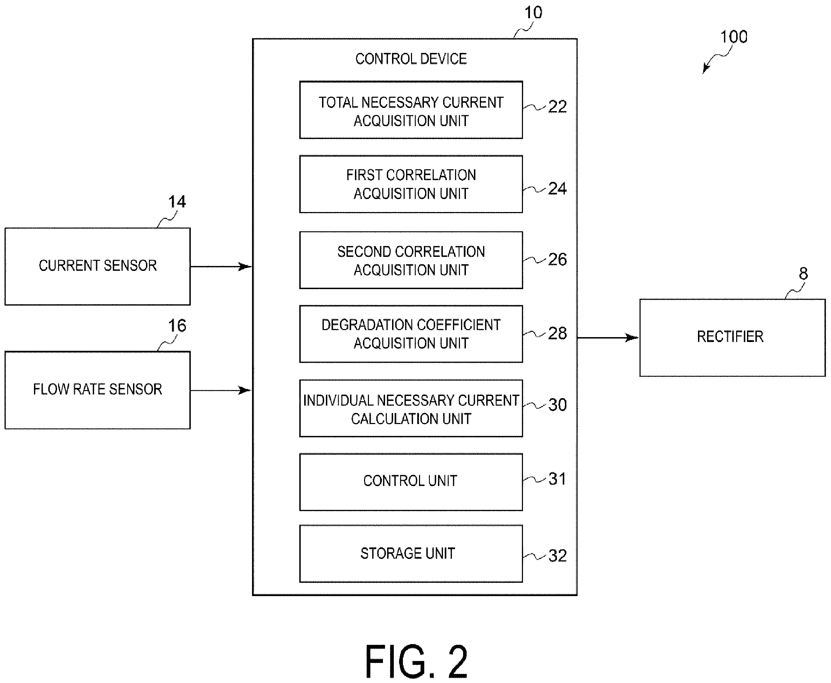

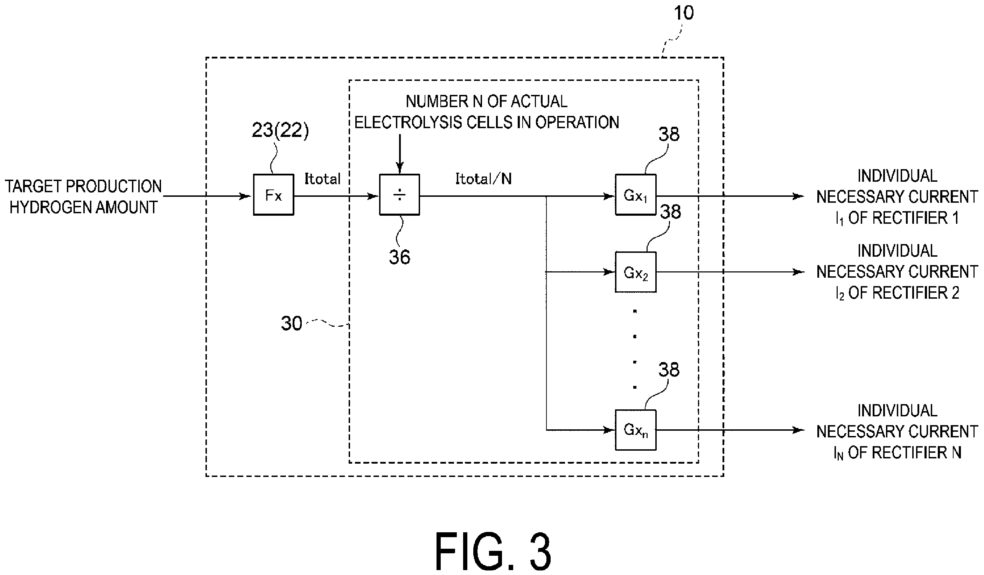

Next, a control device and a method for controlling a hydrogen production facility according to some embodiments will be described. FIG. 2 is a schematic configuration diagram of a control device according to an embodiment. FIG. 3 is a block diagram illustrating a configuration of a control device according to an embodiment. In the following description, control of the hydrogen production facility 100 including N electrolysis cells 2 and N rectifiers 8 will be described. The control device 10 is configured to control the plurality of (that is, N) rectifiers 8 on the basis of measurement results obtained by the current sensors 14 and/or the flow rate sensor 16, and the like.

As illustrated in FIG. 2 and FIG. 3, the control device 10 according to an embodiment includes a degradation coefficient acquisition unit 28 and an individual necessary current calculation unit 30. Further, as illustrated in FIG. 2, the control device 10 may include a total necessary current acquisition unit 22, a first correlation acquisition unit 24, a second correlation acquisition unit 26, a control unit 31, and/or a storage unit 32.

The control device 10 includes a computer including a processor (central processing unit (CPU) or the like), a primary storage device (memory device; random access memory (RAM) or the like), an auxiliary storage device, an interface, and the like. The control device 10 is configured to receive signals from the current sensors 14 and/or the flow rate sensor 16 via the interface. The processor is configured to process the signals received in this manner. Further, the processor is configured to process programs loaded in the primary storage device. Accordingly, functions of the total necessary current acquisition unit 22, the first correlation acquisition unit 24, the second correlation acquisition unit 26, the degradation coefficient acquisition unit 28, the individual necessary current calculation unit 30, and the control unit 31 described above are realized. Note that the storage unit 32 described above may include the primary storage device or the auxiliary storage device of the computer constituting the control device 10.

The processing contents of the control device 10 are implemented as programs to be executed by the processor. The programs may be stored in, for example, the auxiliary storage device. When the programs are executed, the programs are loaded in the primary storage device. The processor is configured to read the programs from the primary storage device and execute instructions included in the programs.

The total necessary current acquisition unit 22 is configured to acquire a total necessary current $I_{total}$ corresponding to a hydrogen generation volume required for the hydrogen production facility 100. The total necessary current acquisition unit 22 may include a converter 23 (refer to FIG. 3) that converts the hydrogen generation volume required for the hydrogen production facility 100 into the total necessary current $I_{total}$. The converter 23 may be configured to convert the hydrogen generation volume into the total necessary current $I_{total}$ by using a function indicating a correlation between the hydrogen generation volume and the total necessary current $I_{total}$.

For example, the total necessary current acquisition unit 22 may acquire the consumption flow rate of hydrogen in the hydrogen consumption facility 6 supplied with hydrogen from the storage part 4, and calculate the total necessary current $I_{total}$ of the hydrogen production facility 100 on the basis of the consumption flow rate. The total necessary current acquisition unit 22 may acquire a flow rate of hydrogen supplied from the storage part 4 to the hydrogen consumption facility 6 as the consumption flow rate of hydrogen in the hydrogen consumption facility 6. In this case, the hydrogen flow rate measured by the flow rate sensor 16 (refer to FIG. 1) may be acquired as the consumption flow rate. Alternatively, the total necessary current acquisition unit 22 may calculate the consumption flow rate of hydrogen on the basis of a fuel command value that is a command value of the fuel flow rate supplied to the hydrogen consumption facility 6 as the consumption flow rate of hydrogen in the hydrogen consumption facility 6. In this case, the total necessary current acquisition unit 22 may be configured to convert the fuel command value into a hydrogen flow rate using a function that indicates a correlation between the fuel command value and the hydrogen flow rate.

The first correlation acquisition unit 24 is configured to acquire, for each of the plurality of (N) electrolysis cells 2, a first correlation indicating a correlation between an applied voltage to the electrolysis cell 2 and a current flowing through a circuit including the electrolysis cell 2 at a beginning of life (BOL) of the electrolysis cell 2.

The first correlation is determined by specifications (design) of the electrolysis cell 2, and can be acquired in advance. The first correlation thus acquired in advance may be stored in the storage unit 32 in advance. The first correlation acquisition unit 24 may be configured to acquire the first correlation stored in advance in the storage unit 32.

Alternatively, two or more data points related to the applied voltage described above and the current described above at the beginning of life of the electrolysis cell 2 may be measured, and the first correlation may be calculated on the basis of the two or more data points. The first correlation acquisition unit 24 may calculate an approximate curve (approximate straight line or the like) from the two or more data points and acquire the approximate curve thus calculated as the first correlation. The measurement value of the current described above may be a value acquired using the current sensor 14 (refer to FIG. 1). The measurement value of the applied voltage described above may be a measurement value of a voltage sensor (not illustrated) that measures the voltage between the pair of electrodes of the electrolysis cell 2.

The second correlation acquisition unit 26 is configured to acquire, for each of the plurality of (N) electrolysis cells 2, a second correlation indicating a correlation between the voltage applied to the electrolysis cell 2 and the current flowing through the circuit including the electrolysis cell 2 at an end of life (EOL) of the electrolysis cell 2.

The second correlation is determined by the specifications (design) of the electrolysis cell 2, and can be acquired in advance. The second correlation thus acquired in advance may be stored in the storage unit 32 in advance. The second correlation acquisition unit 26 may be configured to acquire the second correlation stored in advance in the storage unit 32.

Alternatively, two or more data points related to the applied voltage described above and the current described above at the end of life of the electrolysis cell 2 may be measured, and the second correlation may be calculated on the basis of the two or more data points. The second correlation acquisition unit 26 may calculate an approximate curve (approximate straight line or the like) from the two or more data points and acquire the approximate curve thus calculated as the second correlation. The measurement value of the current described above may be a value acquired using the current sensor 14 (refer to FIG. 1). The measurement value of the applied voltage described above may be a measurement value of a voltage sensor (not illustrated) that measures the voltage between the pair of electrodes of the electrolysis cell 2.

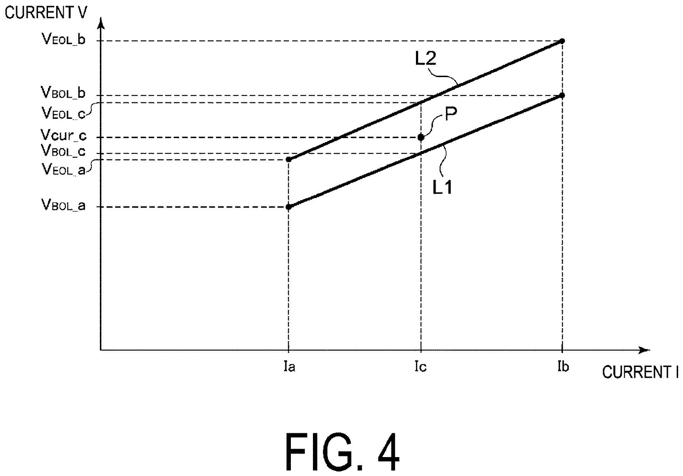

The first correlation coefficient and the second correlation coefficient can be calculated, for example, as follows. Here, FIG. 4 is a graph for describing procedures of a method of control according to an embodiment. A vertical axis of the graph of FIG. 4 represents an applied voltage V of the electrolysis cell 2 (that is, output voltage of the rectifier 8), and a horizontal axis represents current I of the circuit including the electrolysis cell 2.

In a certain electrolysis cell 2, a current value necessary to obtain a hydrogen generation volume Fa (for example, 40% during rated operation) is Ia, and a current value necessary to obtain a hydrogen generation volume Fb (for example, 100% during rated operation) is Ib. Further, in this electrolysis cell 2, the applied voltage (design value) for obtaining the current value Ia at the beginning of life is $V_{BOL\_a}$, and the applied voltage (design value) for obtaining the current value Ib at the beginning of life is $V_{BOL\_b}$.

From these two data points of the current and the applied voltage (that is, (Ia, $V_{BOL\_a}$) and (Ib, $V_{BOL\_b}$)), the correlation (first correlation) between the applied voltage $V_{BOL}$ and the current I at the beginning of life of this electrolysis cell 2 can be expressed by $V_{BOL} = (V_{BOL\_b} - V_{BOL\_a})/(Ib - Ia) \times I + \alpha_{BOL}$ (where $\alpha_{BOL}$ is an intercept). In FIG. 4, a straight line L1 is a straight line indicating this first correlation.

Further, in the electrolysis cell 2 described above, the applied voltage (design value) for obtaining the current value Ia at the end of life is $V_{EOL\_a}$, and the applied voltage (design value) for obtaining the current value Ib at the end of life is $V_{EOL\_b}$.

From these two data points of the current and the applied voltage (that is, (Ia, $V_{EOL\_a}$) and (Ib, $V_{EOL\_b}$)), the correlation (second correlation) between the applied voltage $V_{EOL}$ and the current I at the end of life of the electrolysis cell 2 can be expressed by $V_{EOL} = (V_{EOL\_b} - V_{EOL\_a})/(Ib - Ia) \times I + \alpha_{EOL}$ (where $\alpha_{EOL}$ is an intercept). In FIG. 4, a straight line L2 is a straight line indicating this second correlation.

The degradation coefficient acquisition unit 28 is configured to acquire a plurality of (that is, N) degradation coefficients $D_i$ ($D_1$, $D_2$, ..., $D_N$) respectively indicating degrees of deterioration of the N electrolysis cells 2 on the basis of the first correlation acquired by the first correlation acquisition unit 24 and the second correlation acquired by the second correlation acquisition unit 26.

The degradation coefficient acquisition unit 28 may be configured to calculate, for each of the plurality of electrolysis cells 2, the degradation coefficient Di on the basis of an applied voltage to the electrolysis cell 2 necessary at present to cause a current of a specific value to flow through a circuit including the electrolysis cell, a voltage value corresponding to the current of the specific value determined from the first correlation described above, and a voltage value corresponding to the current of the specific value determined from the second correlation.

In an embodiment, the degradation coefficient $D_i$ can be calculated as a deterioration rate at the beginning of life of the electrolysis cell 2 (100% at the beginning of life, 0% at the end of life).

More specifically, the degradation coefficient $D_i$ ($D_1$, $D_2$, ..., $D_N$) can be calculated, for example, as follows. For the electrolysis cell 2 for which the degradation coefficient $D_i$ is to be calculated, the measurement value (operation data or the like) of the applied voltage necessary at present to cause a current Ic of the specific value to flow through the circuit including the electrolysis cell 2 is defined as Vcur_c (indicated by point P in FIG. 4). Further, an applied voltage $V_{BOL\_c}$ necessary at the beginning of life of the electrolysis cell 2 for causing the current Ic described above to flow can be calculated from the first correlation described above, and an applied voltage $V_{EOL\_c}$ necessary at the end of life of the electrolysis cell 2 for causing the Ic described above to flow can be calculated from the second correlation described above (refer to FIG. 4).

In this case, the degradation coefficient (deterioration rate) $D_i$ at present (100% at the beginning of life and 0% at the end of life) for the target electrolysis cell 2 can be expressed by, for example, Equation (A) below.

$$D_i = (V_{EOL\_c} - Vcur\_c)/(V_{EOL\_c} - V_{BOL\_c}) \times 100 \ (\%) \qquad (A)$$

For the plurality of electrolysis cells 2, the plurality of degradation coefficients $D_i$ ($D_1$, $D_2$, ..., $D_N$) can be calculated using, for example, Equation (A) described above.

The individual necessary current calculation unit 30 is configured to calculate a plurality of individual necessary currents $I_i$ ($I_1$, $I_2$, ..., $I_N$) respectively indicating necessary currents required for the plurality of electrolysis cells 2 on the basis of the total necessary current $I_{total}$ acquired by the total necessary current acquisition unit 22 and the plurality of degradation coefficients $D_i$ ($D_1$, $D_2$, ..., $D_N$) acquired by the degradation coefficient acquisition unit 28.

The individual necessary current calculation unit 30 may calculate the plurality of individual necessary currents $I_i$ ($I_1$, $I_2$, ..., $I_N$) corresponding to the plurality of electrolysis cells 2 using respective ratios ($D_i/D_{AVG}$) of the degradation coefficients $D_i$ of the plurality of electrolysis cells to an average $D_{AVG}$ of the degradation coefficients $D_i$ ($D_1$, $D_2$, ..., $D_N$) of the plurality of electrolysis cells 2. Note that the average $D_{AVG}$ of the plurality of degradation coefficients $D_i$ may be an arithmetic average of the plurality of degradation coefficients $D_i$. In this case, the average $D_{AVG}$ of the plurality of degradation coefficients is expressed by Equation (B) below.

$$D_{AVG} = (D_1 + D_2 + ... + D_N)/N \quad (B)$$

More specifically, the plurality of individual necessary currents $I_i$ ($I_1$, $I_2$, ..., $I_N$) can be calculated, for example, as follows. As illustrated in FIG. 3, the individual necessary current calculation unit 30 divides the total necessary current $I_{total}$ acquired by the total necessary current acquisition unit 22 by the number N of the electrolysis cells 2 in operation to obtain a temporary necessary current $I_{total}/N$ per electrolysis cell 2. Note that, as illustrated in FIG. 3, the individual necessary current calculation unit 30 may include a divider 36 configured to divide the total necessary current $I_{total}$ by the number N of the electrolysis cells 2 in operation.

Next, for each of the N electrolysis cells 2, the individual necessary current $I_i$ ($I_1$, $I_2$, ..., $I_N$) that is the necessary current required for the electrolysis cell 2 may be calculated by multiplying the temporary necessary current $I_{total}/N$ described above by the ratio ($D_i/D_{AVG}$) described above. That is, the individual necessary currents $I_i$ ($I_1$, $I_2$, ..., $I_N$) for the respective electrolysis cells 2 may be calculated from Equation (C) below.

$$I_i = I_{total}/N \times (D_i/D_{AVG}) \quad (C)$$

Note that, as illustrated in FIG. 3, the individual necessary current calculation unit 30 may include a converter 38 configured to convert the necessary current $I_{total}/N$ into the individual necessary current $I_i$ by multiplying the temporary necessary current $I_{total}/N$ described above by the ratio ($D_i/D_{AVG}$) described above.

For the plurality of electrolysis cells 2, the plurality of individual necessary currents $I_i$ ($I_1$, $I_2$, ..., $I_N$) can be calculated using the Equation (C) described above.

The control unit 31 is configured to respectively control the plurality of (that is, N) rectifiers 8 on the basis of the plurality of individual necessary currents $I_i$ ($I_1$, $I_2$, ..., $I_N$) calculated by the individual necessary current calculation unit 30. The control unit 31 may be configured to adjust the output voltage of each rectifier 8 so that the currents flowing through the circuits including the respective electrolysis cells 2 corresponding to each rectifier 8 match or approach the individual necessary currents $I_i$ ($I_1$, $I_2$, ..., $I_N$).

The storage unit 32 may store measurement values or design values acquired in advance or the first correlation and/or the second correlation described above, or the like.

The degree of deterioration of the electrolysis cell 2 is reflected in the cell voltage during operation, and a higher applied voltage to the electrolysis cell (that is, output voltage from the rectifier to the electrolysis cell) with respect to the same hydrogen generation volume (that is, with respect to the same current) indicates more advanced deterioration of the electrolysis cell. In this regard, according to the embodiment described above, for each of the plurality of electrolysis cells 2, the degradation coefficient $D_i$ can be appropriately acquired on the basis of the first correlation indicating the correlation between the applied voltage to the electrolysis cell 2 and the current flowing through the circuit including the electrolysis cell 2 at the beginning of life of the electrolysis cell 2, and the second correlation indicating the correlation at the end of life of the electrolysis cell 2.

Further, the individual necessary currents respectively required for the plurality of electrolysis cells are calculated on the basis of the degradation coefficients $D_i$ for the plurality of electrolysis cells 2 thus acquired and the total necessary current $I_{total}$ corresponding to the hydrogen generation volume required for the hydrogen production facility 100 as a whole, making it possible to appropriately distribute the necessary currents in accordance with the respective degrees of deterioration of the plurality of electrolysis cells 2. For example, for the electrolysis cells 2 relatively advanced in deterioration, the necessary currents can be distributed so that the individual necessary currents $I_i$ are relatively small. DC voltage is output from the rectifiers 8 to each electrolysis cell 2 on the basis of the plurality of individual necessary currents $I_i$ thus calculated, making it possible to delay the deterioration of the electrolysis cells 2 relatively advanced in deterioration, for example, and reduce the variations in the degree of deterioration among the plurality of electrolysis cells 2. Therefore, according to the embodiment described above, it is possible to lengthen the operation period (service life) of the hydrogen production facility 100 as a whole.

Further, as described above, in some embodiments, for each of the plurality of electrolysis cells 2, the degradation coefficient described above can be acquired on the basis of the applied voltage to the electrolysis cell 2 necessary at present to cause a current of a specific value to flow through the circuit including the electrolysis cell 2, the voltage value corresponding to the current of the specific value determined from the first correlation described above, and the voltage value corresponding to the current of the specific value determined from the second correlation described above. This makes it possible to acquire appropriate degradation coefficients $D_i$ for the plurality of electrolysis cells 2 by a simple means.

Further, as described above, in some embodiments, the plurality of individual necessary currents $I_i$ corresponding to the plurality of electrolysis cells 2 are respectively calculated using the respective ratios of the degradation coefficients $D_i$ of the plurality of electrolysis cells 2 to the average $D_{AVE}$ of the degradation coefficients of the plurality of electrolysis cells 2. This makes it possible to appropriately distribute the necessary currents in accordance with the respective degrees of deterioration of the plurality of electrolysis cells 2. For example, for the electrolysis cells 2 relatively advanced in deterioration, the necessary currents can be distributed so that the individual necessary currents $I_i$ are relatively small. The plurality of rectifiers 8 are controlled on the basis of the individual necessary currents $I_i$ thus calculated, making it easier to reduce the variations in the degree of deterioration among the plurality of electrolysis cells 2. This makes it possible to lengthen the operating period of the hydrogen production facility 100 as a whole.

The content described in each of the above embodiments is understood as follows, for example.

(1) A control device for a hydrogen production facility according to at least one embodiment of the present invention is a control device (10) for a hydrogen production facility (100) including a plurality of electrolysis cells (2) for electrolyzing water or steam, and a plurality of rectifiers (8) for respectively supplying DC power to the plurality of electrolysis cells, the control device including:

a degradation coefficient acquisition unit (28) configured to acquire a plurality of degradation coefficients ($D_i$) respectively indicating degrees of deterioration of the plurality of electrolysis cells;

an individual necessary current calculation unit (30) configured to calculate, on the basis of a total necessary current corresponding to a hydrogen generation volume required for the hydrogen production facility and the plurality of degradation coefficients, a plurality of individual necessary currents ($I_i$) respectively indicating necessary currents required for the plurality of electrolysis cells; and

a control unit (31) configured to respectively control the plurality of rectifiers on the basis of the plurality of individual necessary currents, wherein

the degradation coefficient acquisition unit is configured to acquire, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

The degree of deterioration of the electrolysis cell is reflected in the cell voltage during operation, and a higher applied voltage to the electrolysis cell (that is, output voltage from the rectifier to the electrolysis cell) with respect to the same hydrogen generation volume (that is, with respect to the same current) indicates further progress in deterioration of the electrolysis cell. In this regard, according to the configuration of (1) described above, for each of the plurality of electrolysis cells, the degradation coefficient can be appropriately acquired on the basis of the first correlation indicating the correlation between the applied voltage to the electrolysis cell and the current flowing through the circuit including the electrolysis cell at the beginning of life of the electrolysis cell, and the second correlation indicating the correlation at the end of life of the electrolysis cell.

Further, the individual necessary currents respectively required for the plurality of electrolysis cells are calculated on the basis of the degradation coefficients for the plurality of electrolysis cells thus acquired and the total necessary current corresponding to the hydrogen generation volume required for the hydrogen production facility as a whole, making it possible to appropriately distribute the necessary currents in accordance with the respective degrees of deterioration of the plurality of electrolysis cells. For example, for the electrolysis cells relatively advanced in deterioration, the necessary currents can be distributed so that the individual necessary currents are relatively small. DC voltage is output from the rectifiers to each electrolysis cell on the basis of the plurality of individual necessary currents thus calculated, making it possible to delay the deterioration of the electrolysis cells relatively advanced in deterioration, for example, and reduce the variations in the degree of deterioration among the plurality of electrolysis cells. Therefore, according to the configuration of (1) described above, it is possible to lengthen the operation period (service life) of the hydrogen production facility as a whole.

(2) In some embodiments, in the configuration of (1) described above, the degradation coefficient acquisition unit is configured to acquire, for each of the plurality of electrolysis cells, the degradation coefficient on the basis of an applied voltage (Vcur_c) to the electrolysis cell necessary at present to cause a current ($I_c$) of a specific value to flow through a circuit including the electrolysis cell, a voltage value ($V_{BOL\_c}$) corresponding to the current of the specific value determined from the first correlation, and a voltage value ($V_{EOL\_c}$) corresponding to the current of the specific value determined from the second correlation.

According to the configuration of (2) described above, for each of the plurality of electrolysis cells, the degradation coefficient described above is acquired on the basis of the applied voltage to the electrolysis cell necessary at present to cause a current of a specific value to flow through the circuit including the electrolysis cell, the voltage value corresponding to the current of the specific value determined from the first correlation described above, and the voltage value corresponding to the current of the specific value determined from the second correlation described above. This makes it possible to acquire appropriate degradation coefficients for the plurality of electrolysis cells by a simple means.

(3) In some embodiments, in the configuration of (1) or (2) described above, the control device includes a first correlation acquisition unit (24) configured to calculate, for each of the plurality of electrolysis cells using at least two pieces of data of an applied voltage to the electrolysis cell and a current flowing through a circuit including the electrolysis cell at a beginning of life of the electrolysis cell, an approximate curve indicating a relationship between the applied voltage and the current at the beginning of life (BOL) of the electrolysis cell as the first correlation.

According to the configuration of (3) described above, for each of the plurality of electrolysis cells, an approximate curve (first correlation) indicating the relationship between the applied voltage and the current at the beginning of life of the electrolysis cell is calculated from at least two data points of the applied voltage to the electrolysis cell and the current flowing through the circuit including the electrolysis cell at the beginning of life of the electrolysis cell. This makes it possible to acquire the first correlation by a simple means.

(4) In some embodiments, in the configuration of any one of (1) to (3) described above, the control device includes a second correlation acquisition unit (26) configured to calculate, for each of the plurality of electrolysis cells using at least two pieces of data of an applied voltage to the electrolysis cell and a current flowing through a circuit including the electrolysis cell at an end of life of the electrolysis cell, an approximate curve indicating a relationship between the applied voltage and the current at the end of life (EOL) of the electrolysis cell as the second correlation.

According to the configuration of (4) described above, for each of the plurality of electrolysis cells, an approximate curve (second correlation) indicating the relationship between the applied voltage and the current at the end of life of the electrolysis cell is calculated from at least two data points of the applied voltage to the electrolysis cell and the current flowing through the circuit including the electrolysis cell at the end of life of the electrolysis cell. This makes it possible to acquire the second correlation by a simple means.

(5) In some embodiments, in the configuration of any one of (1) to (4) described above, the individual necessary current calculation unit is configured to calculate the plurality of individual necessary currents corresponding to the plurality of electrolysis cells using a ratio ($D_i/D_{AVE}$) of a degradation coefficient ($D_i$) of each of the plurality of electrolysis cells to an average ($D_{AVE}$) of the degradation coefficients of the plurality of electrolysis cells.

According to the configuration of (5) described above, the plurality of individual necessary currents corresponding to the plurality of electrolysis cells are respectively calculated using the respective ratios of the degradation coefficients of the plurality of electrolysis cells to the average of the degradation coefficients of the plurality of electrolysis cells. This makes it possible to appropriately distribute the necessary currents in accordance with the respective degrees of deterioration of the plurality of electrolysis cells. For example, for the electrolysis cell relatively advanced in deterioration, the necessary currents can be distributed so that the individual necessary currents are relatively small. The plurality of rectifiers are controlled on the basis of the individual necessary currents thus calculated, making it easier to reduce the variations in the degree of deterioration among the plurality of electrolysis cells. Therefore, according to the configuration of (5) described above, it is possible to lengthen the operation period of the hydrogen production facility as a whole.

(6) In some embodiments, a hydrogen production facility (100) according to at least one embodiment of the present invention includes:

a plurality of electrolysis cells (2) for electrolyzing water or steam;
a plurality of rectifiers (8) for respectively supplying DC power to the plurality of electrolysis cells; and
the control device (10) according to any one of (1) to (5) described above configured to adjust an output voltage or an output current of each of the plurality of rectifiers.

According to the configuration of (6) described above, for each of the plurality of electrolysis cells, the degradation coefficient can be appropriately acquired on the basis of the first correlation indicating the correlation between the applied voltage to the electrolysis cell and the current flowing through the circuit including the electrolysis cell at the beginning of life of the electrolysis cell, and the second correlation indicating the correlation at the end of life of the electrolysis cell.

Further, the individual necessary currents respectively required for the plurality of electrolysis cells are calculated on the basis of the degradation coefficients for the plurality of electrolysis cells thus acquired and the total necessary current corresponding to the hydrogen generation volume required for the hydrogen production facility as a whole, making it possible to appropriately distribute the necessary currents in accordance with the respective degrees of deterioration of the plurality of electrolysis cells. For example, for the electrolysis cell relatively advanced in deterioration, the necessary currents can be distributed so that the individual necessary currents are relatively small. DC voltage is output from the rectifiers to each electrolysis cell on the basis of the plurality of individual necessary currents thus calculated, making it possible to delay the deterioration of the electrolysis cells relatively advanced in deterioration, for example, and reduce the variations in the degree of deterioration among the plurality of electrolysis cells. Therefore, according to the configuration of (6) described above, it is possible to lengthen the operation period (service life) of the hydrogen production facility as a whole.

(7) A control method for a hydrogen production facility according to at least one embodiment of the present invention is a method for controlling a hydrogen production facility (100) including a plurality of electrolysis cells (2) for electrolyzing water or steam, and a plurality of rectifiers (8) for respectively supplying DC power to the plurality of electrolysis cells. The control method includes acquiring a plurality of degradation coefficients respectively indicating degrees of deterioration of the plurality of electrolysis cells, calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells, and respectively controlling the plurality of rectifiers on the basis of the plurality of individual necessary currents. The acquiring the plurality of degradation coefficients acquires, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

According to the configuration of (7) described above, for each of the plurality of electrolysis cells, the degradation coefficient can be appropriately acquired on the basis of the first correlation indicating the correlation between the applied voltage to the electrolysis cell and the current flowing through the circuit including the electrolysis cell at the beginning of life of the electrolysis cell, and the second correlation indicating the correlation at the end of life of the electrolysis cell.

Further, the individual necessary currents respectively required for the plurality of electrolysis cells are calculated on the basis of the degradation coefficients for the plurality of electrolysis cells thus acquired and the total necessary current corresponding to the hydrogen generation volume required for the hydrogen production facility as a whole, making it possible to appropriately distribute the necessary currents in accordance with the respective degrees of deterioration of the plurality of electrolysis cells. For example, for the electrolysis cell relatively advanced in deterioration, the necessary currents can be distributed so that the individual necessary currents are relatively small. DC voltage is output from the rectifiers to each electrolysis cell on the basis of the plurality of individual necessary currents thus calculated, making it possible to delay the deterioration of the electrolysis cells relatively advanced in deterioration, for example, and reduce the variations in the degree of deterioration among the plurality of electrolysis cells. Therefore, according to the method of (7) described above, it is possible to lengthen the operation period (service life) of the hydrogen production facility as a whole.

(8) A control program for a hydrogen production facility according to at least one embodiment of the present invention is a control program for controlling a hydrogen production facility (100) including a plurality of electrolysis cells (2) for electrolyzing water or steam, and a plurality of rectifiers (8) for supplying DC power to each of the plurality of electrolysis cells. The control program configured to cause a computer to execute acquiring a plurality of degradation coefficients respectively indicating degrees of deterioration of the plurality of electrolysis cells, calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells, and respectively controlling the plurality of rectifiers on the basis of the plurality of individual necessary currents. The acquiring the plurality of degradation coefficients acquires, for each of the plurality of electrolysis cells, the degradation coefficient on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

According to the program of (8) described above, for each of the plurality of electrolysis cells, the degradation coefficient can be appropriately acquired on the basis of the first correlation indicating the correlation between the applied voltage to the electrolysis cell and the current flowing through the circuit including the electrolysis cell at the beginning of life of the electrolysis cell, and the second correlation indicating the correlation at the end of life of the electrolysis cell.

Further, the individual necessary currents respectively required for the plurality of electrolysis cells are calculated on the basis of the degradation coefficients for the plurality of electrolysis cells thus acquired and the total necessary current corresponding to the hydrogen generation volume required for the hydrogen production facility as a whole, making it possible to appropriately distribute the necessary currents in accordance with the respective degrees of deterioration of the plurality of electrolysis cells. For example, for the electrolysis cell relatively advanced in deterioration, the necessary currents can be distributed so that the individual necessary currents are relatively small. DC voltage is output from the rectifiers to each electrolysis cell on the basis of the plurality of individual necessary currents thus calculated, making it possible to delay the deterioration of the electrolysis cells relatively advanced in deterioration, for example, and reduce the variations in the degree of deterioration among the plurality of electrolysis cells. Therefore, according to the program of (8) described above, it is possible to lengthen the operation period (service life) of the hydrogen production facility as a whole.

The embodiments of the present invention have been described above. However, the present invention is not limited to the above-described embodiments, and includes forms obtained by modifying the above-described embodiments and forms obtained by appropriately combining these forms.

In the present specification, an expression of a relative or absolute arrangement, such as "in a direction", "along a direction", "parallel", "orthogonal", "centered", "concentric", or "coaxial" shall not be construed as indicating the arrangement only in a strict literal sense, but also construed as expressing a state where the arrangement is relatively displaced by a tolerance, or by an angle or a distance to the extent that the same function can be achieved.

For example, an expression of a state where features are equal, such as "same", "equal", and "uniform" shall not be construed as indicating only a state where the features are equal in a strict literal sense, but also construed as expressing a state where there is a tolerance or a difference to the extent that the same function can be achieved.

In the present specification, an expression indicating a shape such as a rectangular shape or a cylindrical shape shall not be construed as indicating only a shape such as a rectangular shape or a cylindrical shape in a strict geometrical sense, but also construed as indicating a shape including a depression, a protrusion, a chamfered portion, or the like to the extent that the same effect can be achieved.

In the present specification, expressions such as "comprising", "including", or "having" one component are not intended as exclusive expressions that exclude the presence of other components.

Reference Signs List

2 (2A, 2B) Electrolysis cell
4 Storage part
6 Hydrogen consumption facility
8 (8A, 8B) Rectifier
10 Control device
14 (14A, 14B) Current sensor
16 Flow rate sensor
22 Total necessary current acquisition unit
23 Converter
24 First correlation acquisition unit
26 Second correlation acquisition unit
28 Degradation coefficient acquisition unit
30 Individual necessary current calculation unit
31 Control unit
32 Storage unit
36 Divider
38 Converter
90 Power source
92 Transmission system
100 Hydrogen production facility

## Claims

1. A control device for a hydrogen production facility including a plurality of electrolysis cells for electrolyzing water or steam, and a plurality of rectifiers for respectively supplying DC power to the plurality of electrolysis cells, the control device comprising:

   a degradation coefficient acquisition unit configured to acquire a plurality of degradation coefficients respectively indicating degrees of deterioration of the plurality of electrolysis cells;
   an individual necessary current calculation unit configured to calculate, on the basis of a total necessary current corresponding to a hydrogen generation volume required for the hydrogen production facility and the plurality of degradation coefficients, a plurality of individual necessary currents respectively indicating necessary currents required for the plurality of electrolysis cells; and
   a control unit configured to respectively control the plurality of rectifiers on the basis of the plurality of individual necessary currents, wherein
   the degradation coefficient acquisition unit is configured to acquire, for each of the plurality of electrolysis cells, the corresponding one of the plurality of degradation coefficients on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

2. The control device for a hydrogen production facility according to claim 1, wherein
   the degradation coefficient acquisition unit is configured to acquire, for each of the plurality of electrolysis cells, the corresponding one of the plurality of degradation coefficients on the basis of an applied voltage to the electrolysis cell necessary at present to cause a current of a specific value to flow through a circuit including the electrolysis cell, a voltage value corresponding to the current of the specific value determined from the first correlation, and a voltage value corresponding to the current of the specific value determined from the second correlation.

3. The control device for a hydrogen production facility according to claim 1 or 2, comprising
   a first correlation acquisition unit configured to calculate, for each of the plurality of electrolysis cells using at least two pieces of data of an applied voltage to the electrolysis cell and a current flowing through a circuit including the electrolysis cell at a beginning of life of the electrolysis cell, an approximate curve indicating a relationship between the applied voltage and the current at the beginning of life of the electrolysis cell as the first correlation.

4. The control device for a hydrogen production facility according to claim 1 or 2, comprising
a second correlation acquisition unit configured to calculate, for each of the plurality of electrolysis cells using at least two pieces of data of an applied voltage to the electrolysis cell and a current flowing through a circuit including the electrolysis cell at an end of life of the electrolysis cell, an approximate curve indicating a relationship between the applied voltage and the current at the end of life of the electrolysis cell as the second correlation.

5. The control device for a hydrogen production facility according to claim 1 or 2, wherein
the individual necessary current calculation unit is configured to calculate the plurality of individual necessary currents corresponding to the plurality of electrolysis cells using a ratio of a degradation coefficient of each of the plurality of electrolysis cells to an average of the degradation coefficients of the plurality of electrolysis cells.

6. A hydrogen production facility comprising:

   a plurality of electrolysis cells for electrolyzing water or steam;
   a plurality of rectifiers for respectively supplying DC power to the plurality of electrolysis cells; and
   the control device according to claim 1 or 2 configured to adjust an output voltage or an output current of each of the plurality of rectifiers.

7. A control method for controlling a hydrogen production facility including a plurality of electrolysis cells for electrolyzing water or steam, and a plurality of rectifiers for respectively supplying DC power to the plurality of electrolysis cells, the control method comprising:

   acquiring a plurality of degradation coefficients respectively indicating degrees of deterioration of the plurality of electrolysis cells;
   calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells; and
   respectively controlling the plurality of rectifiers on the basis of the plurality of individual necessary currents, wherein
   the acquiring the plurality of degradation coefficients acquires, for each of the plurality of electrolysis cells, the corresponding one of the plurality of degradation coefficients on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

8. A control program for controlling a hydrogen production facility including a plurality of electrolysis cells for electrolyzing water or steam, and a plurality of rectifiers for respectively supplying DC power to the plurality of electrolysis cells, the control program configured to cause a computer to execute:

   acquiring a plurality of degradation coefficients respectively indicating degrees of deterioration of the plurality of electrolysis cells;
   calculating, on the basis of a total necessary current corresponding to a hydrogen generation volume required for the hydrogen production facility and the plurality of degradation coefficients, a plurality of individual necessary currents respectively indicating necessary currents required for the plurality of electrolysis cells; and
   respectively controlling the plurality of rectifiers on the basis of the plurality of individual necessary currents, wherein
   the acquiring the plurality of degradation coefficients acquires, for each of the plurality of electrolysis cells, the corresponding one of the plurality of degradation coefficients on the basis of a first correlation indicating a correlation between an applied voltage to an electrolysis cell among the plurality of electrolysis cells and a current flowing through a circuit including the electrolysis cell at a beginning of life of the electrolysis cell and a second correlation indicating the correlation at an end of life of the electrolysis cell.

FIG. 1

FIG. 2

100

RECTIFIER
8

CONTROL DEVICE
10

TOTAL NECESSARY CURRENT ACQUISITION UNIT
22

FIRST CORRELATION ACQUISITION UNIT
24

SECOND CORRELATION ACQUISITION UNIT
26

DEGRADATION COEFFICIENT ACQUISITION UNIT
28

INDIVIDUAL NECESSARY CURRENT CALCULATION UNIT
30

CONTROL UNIT
31

STORAGE UNIT
32

CURRENT SENSOR
14

FLOW RATE SENSOR
16

FIG. 3

FIG. 4

| | INTERNATIONAL SEARCH REPORT | International application No. |
|---|---|---|
| | | **PCT/JP2023/025823** |

**A. CLASSIFICATION OF SUBJECT MATTER**

*C25B 15/00*(2006.01)i; *C25B 1/04*(2021.01)i; *C25B 1/042*(2021.01)i; *C25B 9/00*(2021.01)i; *C25B 9/70*(2021.01)i
FI:   C25B15/00 302; C25B9/00 A; C25B1/042; C25B9/70; C25B1/04

According to International Patent Classification (IPC) or to both national classification and IPC

**B. FIELDS SEARCHED**

Minimum documentation searched (classification system followed by classification symbols)

C25B15/00; C25B1/04; C25B1/042; C25B9/00; C25B9/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-178175 A (FUJITSU LTD) 15 November 2018 (2018-11-15)<br>paragraphs [0012]-[0051], [0069], [0070], fig. 1-13, 19, 20 | 1-8 |
| Y | JP 2013-525603 A (RECHERCHE 2000 INC) 20 June 2013 (2013-06-20)<br>paragraphs [0034]-[0052], fig. 2-4 | 1-8 |
| A | JP 2005-290557 A (SUMITOMO CHEMICAL CO LTD) 20 October 2005 (2005-10-20)<br>paragraphs [0014]-[0021], fig. 1 | 1-8 |
| A | JP 2019-085602 A (FUJITSU LTD) 06 June 2019 (2019-06-06)<br>paragraphs [0012]-[0091], fig. 1-20 | 1-8 |
| A | JP 2014-520963 A (THYSSENKRUPP UHDE GMBH) 25 August 2014 (2014-08-25)<br>paragraphs [0058]-[0074], fig. 1-4 | 1-8 |
| A | US 2006/0289312 A1 (RECHERCHE 2000 INC) 28 December 2006 (2006-12-28)<br>paragraphs [0027]-[0052], fig. 1-6 | 1-8 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/025823**

| Patent document cited in search report | | | Publication date (day/month/year) | Patent family member(s) | | | Publication date (day/month/year) |
|---|---|---|---|---|---|---|---|
| JP | 2018-178175 | A | 15 November 2018 | US | 2018/0291516 | A1 | |
| | | | | paragraphs [0028]-[0068], [0086], [0087], fig. 1-13, 19, 20 | | | |
| JP | 2013-525603 | A | 20 June 2013 | WO | 2011/130819 | A1 | |
| | | | | paragraphs [0034]-[0062], fig. 2-4 | | | |
| | | | | CA | 2794737 | A | |
| JP | 2005-290557 | A | 20 October 2005 | (Family: none) | | | |
| JP | 2019-085602 | A | 06 June 2019 | US | 2019/0127867 | A1 | |
| | | | | paragraphs [0028]-[0108], fig. 1-20 | | | |
| JP | 2014-520963 | A | 25 August 2014 | US | 2015/0127279 | A1 | |
| | | | | paragraphs [0084]-[0100], fig. 1-4 | | | |
| | | | | WO | 2013/010630 | A1 | |
| | | | | EP | 2734660 | A1 | |
| | | | | DE | 102011107935 | A | |
| | | | | TW | 201305390 | A | |
| | | | | CA | 2841008 | A | |
| | | | | CN | 103842556 | A | |
| US | 2006/0289312 | A1 | 28 December 2006 | WO | 2006/133562 | A1 | |
| | | | | EP | 1910588 | A1 | |
| | | | | ES | 2675333 | T | |

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022126962 A
- JP 2002129372 A